# EUROPÄISCHE PATENTSCHRIFT

(11) **EP 4 036 037 B1**
(45) Veröffentlichungstag und Bekanntmachung des Hinweises auf die Patenterteilung: **08.11.2023**
(21) Anmeldenummer: 21207825.7
(22) Anmeldetag: 11.11.2021
(51) Int. Cl.: B65G 1/04, B65G 1/06

(54) **VERFAHREN ZUM BETREIBEN EINES LAGER- UND ENTNAHMESYSTEMS SOWIE EIN LAGER- UND ENTNAHMESYSTEM**
STORAGE AND RETRIEVAL SYSTEM AND METHOD FOR OPERATING A STORAGE AND RETRIEVAL SYSTEM
PROCÉDÉ DE FONCTIONNEMENT D'UN SYSTÈME DE STOCKAGE ET DE RETRAIT, AINSI QUE SYSTÈME DE STOCKAGE ET DE RETRAIT

(30) Priorität: 27.01.2021 DE 102021200740
(43) Veröffentlichungstag der Anmeldung: 03.08.2022
(73) Patentinhaber: Gebhardt Fördertechnik GmbH, D-74889 Sinsheim (DE)
(72) Erfinder: Gebhardt, Marco, 74889 Sinsheim (DE); Dinkel, Stefan, 74906 Bad Rappenau (DE); Branner, Fabian, 74915 Waibstadt (DE)
(74) Vertreter: Ullrich & Naumann PartG mbB

(56) Entgegenhaltungen:
- EP-A2- 3 081 511
- WO-A1-2014/145437
- DE-B3-102011 117 487

## Beschreibung

Die Erfindung betrifft ein Verfahren zum Betreiben eines Lager- und Entnahmesystems, wobei das Lager- und Entnahmesystem ein Regallager mit mindestens einem Lagerregal und mindestens einen zumindest bereichsweise in dem Regallager bewegbaren Lagerroboter zum Transportieren und/oder Positionieren von Lagergut in dem Regallager aufweist und wobei ein Zutritt einer Person in einen definierbaren Zutrittsbereich des Regallagers, in dem sich der mindestens eine Lagerroboter zumindest bereichsweise bewegen kann.

Des Weiteren betrifft die vorliegende Erfindung ein Lager- und Entnahmesystem, insbesondere zur Durchführung des Verfahrens zum Betreiben eines Lager- und Entnahmesystems, wobei das Lager- und Entnahmesystem ein Regallager mit mindestens einem Lagerregal und mindestens einen zumindest bereichsweise in dem Regallager bewegbaren Lagerroboter zum Transportieren und/oder Positionieren von Lagergut in dem Regallager aufweist und wobei ein Zutritt einer Person in einen definierbaren Zutrittsbereich des Regallagers, in dem sich der mindestens eine Lagerroboter zumindest bereichsweise bewegen kann, ermöglicht werden kann.

Im Rahmen der vorliegenden Erfindung ist mit Lager- und Entnahmesystem ganz allgemein und ohne irgendwelche Einschränkungen ein System gemeint, in dem beliebiges Lagergut oder in einem Behälter angeordnetes Lagergut gelagert, gegebenenfalls gestapelt und wieder entnommen werden kann. Ein derartiges Lager- und Entnahmesystem weist grundsätzlich ein beliebig ausgestaltetes Regallager mit mindestens einem Lagerregal auf, wobei zwischen einzelnen Lagerregalen Regalgassen gebildet sein können. Das Lager- und Entnahmesystem kann jedoch auch teilweise oder insgesamt als Blocklager ausgebildet sein. Ein Lagerregal kann in einer Regalebene oder in mehreren übereinanderliegenden Regalebenen einen oder mehrere Stellplätze für ein Lagergut oder einen entsprechenden Behälter für ein Lagergut aufweisen.

Dabei kann sich mindestens ein Lagerroboter - meistens mehrere Lagerroboter - zumindest bereichsweise in dem Regallager bewegen. Das bedeutet, dass der mindestens eine Lagerroboter so eingesetzt werden kann, dass er sich entweder in einem bestimmten Bereich in dem Regallager oder auch in dem gesamten Regallager bewegen kann. Ein solcher bestimmter Bereich kann teilweise oder vollständig oder auch gar nicht mit dem definierbaren Zutrittsbereich überlappen.

Bei bekannten Verfahren zum Betreiben eines Lager- und Entnahmesystems und entsprechenden Lager- und Entnahmesystemen wird ein zu betretender definierbarer Zutrittsbereich oder Sicherheitsbereich üblicherweise vollständig deaktiviert, d. h., es ist üblich, den kompletten Zutrittsbereich mit allen Maschinen oder Lagerrobotern darin sicher abzuschalten, um einen Techniker oder eine Person, die den Zutrittsbereich betreten möchte, nicht zu gefährden. In der klassischen Lagertechnik mit als Regalbediengeräten ausgebildeten Lagerrobotern, die je Regalgasse einen Sicherheitsbereich oder Zutrittsbereich bilden, ist es üblich, bei gewünschtem Zutritt nur diese Regalgasse sicher zu deaktivieren. In einem Lager mit beispielsweise zehn Gassen laufen beim Zutritt in eine Gasse somit die übrigen neun Regalgassen weiter. Damit ist die Verfügbarkeit des gesamten Lager- und Entnahmesystems nur geringfügig beeinträchtigt.

Moderne Lager- und Entnahmesysteme zeichnen sich jedoch durch sehr viele Lagerroboter in Form von Shuttles aus und ermöglichen eine deutlich höhere Durchsatzleistung. Teilweise können die Shuttles die Gassen und/oder die Ebenen wechseln, sodass sich ein System mit zu einem Roaming geeigneten Shuttles ergibt. Damit gibt es keinen abgegrenzten Sicherheitsbereich oder Zutrittsbereich wie bei einem Regalbediengerät, der sich aus den Gassen ergibt, sodass gegebenenfalls ein unnötig großer Bereich bei einem gewünschten Zutritt deaktiviert werden muss. Im schlechtesten Fall bedeutet dies eine Deaktivierung aller zehn Gassen beim Zutritt zu einem defekten Shuttle, da die Möglichkeit besteht, dass jedes Shuttle im System sich im zu betretenden Bereich befindet oder dort hingelangt und dort den Techniker verletzt.

Erschwert wird das gezielte Abschalten allgemein durch den häufig realisierten Batteriebetrieb der Lagerroboter. Damit entfällt die triviale Lösung, bei einem gewünschten Zutritt einfach die die Energie für die Lagerroboter bereitstellende Schleifleitung oder Schleppkette im entsprechenden Bereich stromlos zu schalten, sodass gezielt in einem Bereich die für eine Person möglicherweise gefährliche Bewegung des Lagerroboters oder Shuttles verhindert wird.

Damit trotzdem eine hohe Verfügbarkeit realisiert werden kann, wird angestrebt, nur einzelne kleine abgegrenzte Sicherheitsbereiche oder Zutrittsbereich zu schaffen und nur diese abzuschalten oder für einen Zutritt einer Person zu sichern. Dies soll möglichst kostengünstig erfolgen, sodass der Einsatz einer durchgehenden sicheren - also redundanten - Positionierung jedes einzelnen frei fahrenden Shuttles nicht infrage kommt.

WO 2014/145437 A1 offenbart ein Verfahren zum Betreiben eines Lager- und Entnahmesystems, wobei das Lager- und Entnahmesystem ein Regallager mit mindestens einem Lagerregal und mindestens einen zumindest bereichsweise in dem Regallager bewegbaren Lagerroboter zum Transportieren und/oder Positionieren von Lagergut in dem Regallager aufweist und wobei ein Zutritt einer Person in einen definierbaren Zutrittsbereich des Regallagers, in dem sich der mindestens eine Lagerroboter zumindest bereichsweise bewegen kann, ermöglicht wird, mit dem folgenden Schritt: Auslösen einer Anforderung an eine Steuerung für einen Zutritt in den Zutrittsbereich. Das Dokument offenbart auch ein Lager- und Entnahmesystem, wobei das Lager- und Entnahmesystem ein Regallager mit mindestens einem Lagerregal und mindestens einen zumindest bereichsweise in dem Regallager bewegbaren Lagerroboter zum Transportieren und/oder Positionieren von Lagergut in dem Regallager aufweist und wobei ein Zutritt einer Person in einen definierbaren Zutrittsbereich des Regallagers, in dem sich der mindestens eine Lagerroboter zumindest bereichsweise bewegen kann, ermöglicht werden kann, wobei das Lager- und Entnahmesystem aufweist: eine Auslöseeinrichtung zum Auslösen einer Anforderung an eine Steuerung für einen Zutritt in den Zutrittsbereich. Insbesondere, ist aus der WO 2014/145437 A1 ein Lager- und Entnahmesystem bekannt, bei dem neben einer Steuerung für die Bewegung der Shuttles ein separater Controller ausschließlich für die durchgehende Überwachung der Position der Shuttles realisiert ist. Mit diesem Controller kann ein gegebenenfalls kleiner und definierbarer Sicherheitsbereich oder Zutrittsbereich für einen Zutritt einer Person abgeschaltet werden. Die durchgehende Überwachung der Position der Shuttle ist jedoch mit einem erheblichen Aufwand verbunden, da diese Überwachung eine zusätzliche eigenständige Sicherheitssteuerung bildet.

Des Weiteren ist aus der EP 3 081 511 A2 ein Lager- und Entnahmesystem bekannt, bei dem mechanische Absperrungen zur Unterteilung des Regallagers in kleinere Bereiche verwendet werden, wodurch betretbare Zutrittsbereiche erzeugt werden können.

Der vorliegenden Erfindung liegt die Aufgabe zugrunde, ein Verfahren zum Betreiben eines Lager- und Entnahmesystems sowie ein entsprechendes Lager- und Entnahmesystem anzugeben, wonach ein sicherer Zutritt einer Person in einen definierbaren Zutrittsbereich mit konstruktiv einfachen und kostengünstigen Mitteln ermöglicht ist.

Erfindungsgemäß wird die voranstehende Aufgabe durch ein Verfahren mit den Merkmalen des Anspruchs 1 sowie durch eine Vorrichtung mit den Merkmalen des Anspruchs 15 gelöst.

Gemäß Anspruch 1 weist das Verfahren die folgenden Schritte auf:
- Auslösen einer Anforderung an eine Steuerung für einen Zutritt in den Zutrittsbereich;
- Veranlassen des mindestens einen Lagerroboters, auf die Anforderung hin und mittels eines Steuerbefehls durch die Steuerung an den mindestens einen Lagerroboter, zur Bewegung an einen hinsichtlich einer Position im Regallager definierten Referenzpunkt des Regallagers;
- Ermitteln, sobald sich der mindestens eine Lagerroboter in einer definierbaren Umgebung des Referenzpunkts oder direkt am Referenzpunkt befindet, durch den mindestens einen Lagerroboter anhand einer, dem Referenzpunkt zugeordneten oder übermittelten und von dem mindestens einen Lagerroboter erhaltenen oder erkannten, Information über den Zutrittsbereich, ob sich der Referenzpunkt und damit auch der mindestens eine Lagerroboter in dem Zutrittsbereich befindet oder nicht; und
- Verbleiben des mindestens einen Lagerroboters in einem angehaltenen Zustand in der Umgebung des Referenzpunkts oder am Referenzpunkt, falls sich der Referenzpunkt in dem Zutrittsbereich befindet, sodass der Zutritt der Person in den Zutrittsbereich möglich ist und/oder
   Anhalten aller Lagerroboter (3) im Zutrittsbereich (5), die innerhalb eines bestimmten Zeitfensters keinen Referenzpunkt (6) oder keine Umgebung eines Referenzpunkts (6) anfahren konnten und/oder angefahren haben und dort eine Freigabe/Token bezogen haben, so dass der Zutritt der Person in den Zutrittsbereich (5) möglich ist.

Gemäß Anspruch 15 umfasst das Lager- und Entnahmesystem eine Auslöseeinrichtung zum Auslösen einer Anforderung an eine Steuerung für einen Zutritt in den Zutrittsbereich,
- wobei die Steuerung dazu ausgebildet ist, den mindestens einen Lagerroboter, auf die Anforderung hin und mittels eines Steuerbefehls durch die Steuerung an den mindestens einen Lagerroboter, zur Bewegung an einen hinsichtlich einer Position im Regallager definierten Referenzpunkt des Regallagers zu veranlassen;
- wobei der mindestens eine Lagerroboter dazu ausgebildet ist, sobald sich der mindestens eine Lagerroboter in einer definierbaren Umgebung des Referenzpunkts oder direkt am Referenzpunkt befindet, anhand einer, dem Referenzpunkt zugeordneten oder übermittelten und von dem mindestens einen Lagerroboter erhaltenen oder erkannten, Information über den Zutrittsbereich zu ermitteln, ob sich der Referenzpunkt und damit auch der mindestens eine Lagerroboter in dem Zutrittsbereich befindet oder nicht; und
- wobei der mindestens eine Lagerroboter dazu ausgebildet ist, in einem angehaltenen Zustand in der Umgebung des Referenzpunkts oder am Referenzpunkt zu verbleiben, falls sich der Referenzpunkt in dem Zutrittsbereich befindet, sodass der Zutritt der Person in den Zutrittsbereich möglich ist, und/oder
   wobei alle Lagerroboter (3) dazu ausgebildet sind, im Zutrittsbereich (5) angehalten zu werden, falls sie innerhalb eines bestimmten Zeitfensters keinen Referenzpunkt (6) oder keine Umgebung eines Referenzpunkts (6) anfahren konnten und/oder angefahren haben und dort eine Freigabe/Token bezogen haben, so dass der Zutritt der Person in den Zutrittsbereich (5) möglich ist.

In erfindungsgemäßer Weise ist zunächst erkannt worden, dass durch geschickte Nutzung von vorhandenen Strukturen eines Lager- und Entnahmesystems und genauer gesagt des Regallagers die voranstehende Aufgabe auf überraschend einfache Weise gelöst wird. Dabei ist in weiter erfindungsgemäßer Weise erkannt worden, dass eine durchgehende sichere Überwachung der Position von Lagerrobotern zur Gewährleistung eines sicheren Zutritts einer Person in einen definierbaren Zutrittsbereich nicht erforderlich ist. Hierdurch kann das Lager- und Entnahmesystem wesentlich einfacher und kostengünstiger betrieben und strukturiert werden, als dies bei aus dem Stand der Technik bekannten Systemen der Fall ist.

Bei dem erfindungsgemäßen Verfahren erfolgt zunächst ein Auslösen einer Anforderung für einen Zutritt in den Zutrittsbereich, wobei diese Anforderung direkt oder indirekt zur weiteren Verarbeitung der Anforderung an eine Steuerung übermittelt wird. Die Steuerung veranlasst nun - auf die Aufforderung hin - die Übertragung eines Steuerbefehls an den mindestens einen Lagerroboter, wobei der Steuerbefehl auch direkt von der Steuerung gesendet werden kann. Dieser Steuerbefehl veranlasst den mindestens einen Lagerroboter dazu, sich an einen definierten Referenzpunkt des Regallagers zu bewegen, wobei dieser Referenzpunkt hinsichtlich einer Position im Regallager definiert ist. Die Position des Referenzpunkts im Regallager ist somit von Anfang an festgelegt

Sobald sich der mindestens eine Lagerroboter in einer definierbaren Umgebung des Referenzpunkts oder direkt am Referenzpunkt befindet, ermittelt der mindestens eine Lagerroboter anhand einer Information über den Zutrittsbereich, ob sich der Referenzpunkt und damit auch der mindestens eine Lagerroboter in dem Zutrittsbereich befindet oder nicht. Diese Information über den Zutrittsbereich umfasst insbesondere die Information, ob der Zutrittsbereich durch beispielsweise die Anforderung derart definiert ist, dass sich der Referenzpunkt in dem Zutrittsbereich befindet oder nicht. Dabei wird diese Information dem Referenzpunkt zugeordnet oder übermittelt, wobei die Zuordnung oder Übermittlung durch die Steuerung nach Erhalt und damit gegebenenfalls einer Festlegung des definierbaren Zutrittsbereichs erfolgen kann. Die Information kann elektronisch in einem Speicher in dem Referenzpunkt hinterlegt werden oder auch in Form eines Codes, beispielsweise Barcodes oder QR-Codes, an dem Referenzpunkt dargestellt sein. Der mindestens eine Lagerroboter empfängt die Information drahtlos, beispielsweise per Funk, oder erkennt die Information in Form eines Barcodes oder QR-Codes mittels einer optischen Detektionseinrichtung, beispielsweise mittels einer Kamera.

Im Rahmen dieses Ermittlungsschritts ist von Bedeutung, dass sicher festgestellt wird, dass sich der mindestens eine Lagerroboter in einer definierbaren - beispielsweise hinsichtlich ihrer Größe definierten - Umgebung des Referenzpunkts oder direkt am Referenzpunkt befindet. Diese sichere Feststellung kann mittels einer geeigneten Einrichtung erfolgen, die beispielsweise mit RFID-Tags arbeitet. Letztendlich muss eine sichere Position des mindestens einen Lagerroboters nur zu diesem Zeitpunkt oder in diesem Zeitabschnitt vorliegen, in dem sich der mindestens eine Lagerroboter in der Umgebung des Referenzpunkts oder direkt am Referenzpunkt befindet.

Hierbei kann insbesondere nur im Moment oder im Zeitraum des Zutritts kurzzeitig eine sichere Position des mindestens einen Lagerroboters bekannt sein.

Falls sich bei dem Ermittlungsschritt ergeben hat, dass sich der Referenzpunkt in dem Zutrittsbereich befindet, verbleibt der mindestens eine Lagerroboter nun in einem angehaltenen Zustand in der Umgebung des Referenzpunkts oder mehr oder weniger direkt am Referenzpunkt, sodass der sichere Zutritt der Person in den Zutrittsbereich möglich ist. Dieses Verbleiben des mindestens einen Lagerroboters in einem angehaltenen Zustand kann durch den mindestens einen Lagerroboter aufgrund des Ergebnisses des Ermittlungsschritts selbst oder alternativ hierzu durch einen Steuerbefehl durch die Steuerung veranlasst werden.

Es gibt auch Situationen, in denen ein Lagerroboter nicht in der Lage ist, sich zu einem Referenzpunkt oder zu einer Umgebung eines Referenzpunkts hin zu bewegen, wenn beispielsweise ein Lagerroboter aufgrund beispielsweise eines defekten Greifers lediglich deaktiviert wurde aber grundsätzlich noch eine Gefahr für eine Person darstellen kann. In diesem Fall kann alternativ oder zusätzlich zu dem Schritt des Verbleibens ein Anhalten aller Lagerroboter im Zutrittsbereich erfolgen, die innerhalb eines bestimmten Zeitfensters keinen Referenzpunkt oder keine Umgebung eines Referenzpunkts anfahren konnten und/oder angefahren haben und dort eine Freigabe/Token bezogen haben, sodass der Zutritt der Person in den Zutrittsbereich möglich ist.

Die Einfachheit des erfindungsgemäßen Verfahrens und des erfindungsgemäßen Lager- und Entnahmesystems ergibt sich in besonderer Weise insbesondere dadurch, dass kein separater Controller ausschließlich für die durchgehende Überwachung der Position des mindestens einen Lagerroboters realisiert werden muss. Ein oder mehrere definierte Referenzpunkte zur kurzzeitigen sicheren Feststellung der Position des mindestens einen Lagerroboters nach einer Anforderung für einen Zutritt reichen aus. Während des sonstigen Betriebs wird die Position des mindestens einen Lagerroboters nur unsicher zentral verwaltet. Insoweit ist auch kein Haltebefehl von einer zentralen Sicherheitssteuerung im Sinne eines "top down" erforderlich. Bei der vorliegenden Erfindung erfolgt die Auswertung oder Ermittlung, ob der Referenzpunkt im Zutrittsbereich liegt, durch den mindestens einen Lagerroboter.

Folglich sind mit dem erfindungsgemäßen Verfahren und dem erfindungsgemäßen Lager- und Entnahmesystem ein Verfahren sowie ein Lager- und Entnahmesystem bereitgestellt, wonach ein sicherer Zutritt einer Person in einen definierbaren Zutrittsbereich mit konstruktiv einfachen und kostengünstigen Mitteln ermöglicht ist.

Bei einem konkreten Ausführungsbeispiel kann für das Auslösen der Anforderung eine zu einer drahtlosen oder drahtgebundenen Kommunikation mit der Steuerung geeignete Auslöseeinrichtung verwendet werden. Bei einer drahtlosen Kommunikation zwischen Auslöseeinrichtung und Steuerung kann beispielsweise eine WLAN-Anbindung verwendet werden. Es sind jedoch auch andere Funktechnologien möglich. In besonders einfacher Weise kann die Auslöseeinrichtung in der Nähe des Zutrittsbereichs oder an oder in der Nähe einer Zutrittstür zu dem Zutrittsbereich angeordnet sein. Dies bietet sich insbesondere bei bereits durch die Struktur des Lager- und Entnahmesystems definierten Zutrittsbereichen wie beispielsweise Regalgassen an, wobei die Auslöseeinrichtung in räumlicher Nähe zur Zutrittstür realisiert sein kann. Ganz allgemein kann eine derartige Auslöseeinrichtung auch entfernt von einem zu betretenden Zutrittsbereich realisiert sein, beispielsweise bei von dem Zutrittsbereich entfernt arbeitenden Überwachungspersonal, das einen Zutritt aus der Ferne Auslösen möchte, um dann entsprechendes Personal mit dem Zutritt zu beauftragen. In weiter besonders einfacher Weise kann die Auslöseeinrichtung einen Signalgeber oder einen Schalter, beispielsweise Schlüsselschalter, aufweist, der zum Auslösen der Anforderung einfach betätigt werden kann.

In weiter Vorteilhafterweise kann oder können ein oder mehrere geeignete Lagerroboter - nach dem Auslösen der Anforderung - durch die Steuerung veranlasst werden, den Zutrittsbereich zu verlassen. Dies kann beispielsweise erfolgen, wenn der Steuerung bekannt ist, dass sich ein Lagerroboter in einem angeforderten Zutrittsbereich befindet und dieser bereits auf dem Weg in einen anderen Bereich ist. Hierdurch kann im Hinblick auf eine hohe Verfügbarkeit von Lagerrobotern, insbesondere Shuttles, die Anzahl im Zutrittsbereich angehaltener Lagerroboter von vornherein klein gehalten werden. Dieser Schritt kann unmittelbar nach dem Auslösen der Anforderung und noch vor einem Veranlassen eines Lagerroboters zu einer Bewegung zu einem Referenzpunkt erfolgen.

Im Hinblick auf ein besonders sicheres und effektives Verfahren kann das Regallager mehrere definierte Referenzpunkte aufweisen. Derartige Referenzpunkte können bei der Konstruktion des Regallagers in geeigneter Weise definiert und realisiert werden. In weiter vorteilhafter Weise kann oder können ein oder mehrere definierte Referenzpunkte durch eine Ladestation, beispielsweise an einem Anfang einer Regalgasse, gebildet werden oder eine solche Ladestation aufweisen. Dies ergibt den Vorteil, dass eine Ladestation in multifunktionaler Weise auch als Referenzpunkt ausgebildet sein kann und ein Lagerroboter - bei einem Veranlassen eines Verbleibens an dem Referenzpunkt - in vorteilhafter Weise gleichzeitig geladen werden kann, sodass die Zeit des Anhaltens am Referenzpunkt nicht verschwendet, sondern in vorteilhafter Weise genutzt ist.

Im Hinblick auf einen sicheren Zutritt zu dem Zutrittsbereich kann der mindestens eine Lagerroboter seine Position in der definierbaren Umgebung des Referenzpunkts oder an dem Referenzpunkt, vorzugsweise mittels mindestens zwei RFID-Einrichtungen, zumindest kurzzeitig sicher feststellen. Diese Feststellung einer sicheren Position bildet eine sehr einfache Art der sicheren Positionsfeststellung. Eine dauerhafte Überwachung der Position von Lagerrobotern mittels eines separaten Controllers ist hierfür nicht erforderlich.

Zur Bereitstellung einer hohen Verfügbarkeit des mindestens einen Lagerroboters und damit des gesamten Lager- und Entnahmesystems kann der mindestens eine Lagerroboter in der definierbaren Umgebung des Referenzpunkts oder an dem Referenzpunkt nach einem Token oder nach einer Freigabe zur Weiterfahrt anfragen und/oder eine Vergabe eines Tokens oder Freigabe zur Weiterfahrt prüfen. Der Lagerroboter veranlasst die Vergabe eines Tokens also quasi im Sinne eines "bottom up", wobei der Lagerroboter selbst aktiv wird und die Möglichkeit einer Weiterfahrt anhand der erhaltenen und/oder erkannten Information über den Zutrittsbereich überprüft. Dabei übernimmt die Vergabe der Token keine zentrale Steuerung. Es existiert nur beispielsweise eine logische Verknüpfung einer Zutrittstür zu dem Zutrittsbereich mit einer sicheren Referenzposition über beispielsweise eine Tabelle.

Im Konkreten und in besonders vorteilhafter Weise kann die Information über den Zutrittsbereich auf einer Verknüpfung oder Zuordnung des oder der Referenzpunkte oder der durch den mindestens einen Lagerroboter festgestellten Position mit oder zu dem Zutrittsbereich, der Auslöseeinrichtung oder einer Zutrittstür zu dem Zutrittsbereich basieren, wobei vorzugsweise die Information über den Zutrittsbereich, die Verknüpfung oder die Zuordnung anhand einer Tabelle oder in Form einer tabellarischen Information dokumentiert ist. Beispielsweise kann eine Zuordnung des oder der Referenzpunkte zu einer Zutrittstür vorliegen, sodass ein Referenzpunkt einem Lagerroboter die Information übermitteln kann, dass er sich im Zutrittsbereich befindet, wenn der Referenzpunkt ein Auslösen der Anforderung an "seiner" Zutrittstür festgestellt hat oder über ein solches Auslösen informiert worden ist. Dieses Beispiel ist insbesondere bei einem Lager- und Entnahmesystem mit Regalgassen, in den Regalgassen befindlichen Referenzpunkten und Zutrittstüren für jeweils eine Regalgasse besonders anschaulich. In ähnlicher Weise können auch Verknüpfungen oder Zuordnungen von Referenzpunkten oder festgestellten Positionen zu einem Zutrittsbereich oder einer Auslöseeinrichtung in einfacher und vorteilhafter Weise realisiert werden.

Im Hinblick auf die Realisierung eines für eine Person besonders sicheren Zutrittsbereichs kann das Regallager mindestens eine Absperreinrichtung zur zumindest bereichsweisen physischen oder elektrischen Absperrung des Zutrittsbereichs oder mindestens eines Unterbereichs des Zutrittsbereichs aufweisen, wobei vorzugsweise die Absperreinrichtung über die Steuerung, über eine Elektronik des Referenzpunkts oder über den mindestens einen Lagerroboter aktiviert wird. Hierbei kann einerseits der Zutrittsbereich selbst oder in noch feinsinniger Weise ein Unterbereich des Zutrittsbereichs abgesperrt oder gesichert werden. Derartige Absperreinrichtung können ein ungewolltes Einfahren von Lagerrobotern in den Zutrittsbereich quasi aus Versehen - beispielsweise schon unmittelbar nach dem Auslösen der Anforderung - verhindern. Dabei könnte beispielsweise nur ein Gang in dem Regallager abgetrennt werden und müsste nicht eine komplette Etage gesperrt werden. Eine elektrische Absperrung könnte beispielsweise durch ein Deaktivieren eines Hebers für Shuttles erfolgen, der dann Shuttles nicht mehr von einer Ebene zur anderen Ebene und damit in eine gesperrte Ebene bewegen kann.

Eine solche Absperreinrichtung kann eine oder mehrere Schranken aufweisen und/oder durch den mindestens einen Lagerroboter gebildet werden. Hierbei kann beispielsweise ein deaktivierter Lagerroboter - wie eine Schranke - eine Sperre bilden.

In weiter besonders sicherer Weise kann oder können bei einem vorzeitigen Zutritt in den Zutrittsbereich oder bei einem vorzeitigen Öffnen einer Zutrittstür zu dem Zutrittsbereich der mindestens eine Lagerroboter oder sämtliche in dem Zutrittsbereich oder in dem Zutrittsbereich und zusätzlich in einem definierbaren Umfeld um den Zutrittsbereich zum Zeitpunkt oder kurz nach dem Zeitpunkt des vorzeitigen Zutritts befindliche Lagerroboter angehalten werden. Ein solcher vorzeitiger Zutritt oder ein solches vorzeitiges Öffnen einer Zutrittstür kann mittels geeigneter Sensoren detektiert werden, beispielsweise mittels einer Lichtschranke oder eines Türsensors. Hier geht bei einer Abschaltung sämtlicher Lagerroboter die Sicherheit der Personen in besonders drastischer Weise vor der Verfügbarkeit des Systems.

Um eine Abschaltung sämtlicher Lagerroboter zu verhindern kann eine Zutrittstür in besonders vorteilhafter Weise eine während einer vorgebbaren Zeit wirkende - beispielsweise über einen Timer gesteuerte - Zuhaltung aufweisen. Hierdurch wird ein vorzeitiges Öffnen der Zutrittstür verhindert, nämlich bevor die im Zutrittsbereich befindlichen Lagerroboter an Referenzpunkten anhalten. Die vorgebbare Zeit kann so eingestellt werden, dass ein sicheres Anhalten der Lagerroboter in üblichen Situationen sichergestellt ist.

Bei einer besonders effektiven Ausgestaltung des Lager- und Entnahmesystems können einzelnen Regalgassen des Regallagers zugeordnete Steuerungen zur Kommunikation untereinander ausgebildet sein. Dies bewirkt ein besonders effektives Zusammenwirken individueller Komponenten des Lager- und Entnahmesystems.

Alternativ oder zusätzlich hierzu können einzelne Regalgassen des Regallagers als offen gelten, falls eine jeweilige Steuerung ausgeschaltet ist oder eine Fehlfunktion aufweist. Als offen geltende Regalgassen bewirken grundsätzlich ein Abschalten oder Anhalten der Regalgassen und der darin befindlichen Lagerroboter. Insoweit wird hierdurch ein besonders hohes Maß an Sicherheit gewährleistet, insbesondere falls Steuerungen nicht oder fehlerhaft arbeiten.

In gleicher Weise ist eine Ausgestaltung vorteilhaft, bei der nach dem Ermöglichen des Zutritts in den Zutrittsbereich oder bei einer Freigabe des Zutrittsbereichs oder durch eine Öffnung einer Zutrittstür eine Generierung eines Tokens für eine Weiterfahrt oder eine weitere Bewegung des mindestens einen Lagerroboters erforderlich wird. In allen drei genannten Situationen wird die Generierung eines Tokens für eine Weiterfahrt oder eine weitere Bewegung des mindestens einen Lagerroboters erforderlich. Eine solche Generierung eines Tokens kann mit einem beliebig hohen Sicherheitsniveau verbunden werden, sodass je nach individuellem Anwendungsfall das jeweils erforderliche Sicherheitsniveau sicher realisiert werden kann.

Bei einem konkreten Ausführungsbeispiel kann der mindestens eine Lagerroboter durch ein Shuttle, ein Regalbediengerät oder eine sonstige bewegbare Einheit zum Transportieren und/oder Positionieren von Lagergut in dem Regallager (2) gebildet werden. Bei dieser individuellen Ausgestaltung des Lager- und Entnahmesystems bestehen keine Begrenzungen.

Je nach Anwendungsfall kann der Zutrittsbereich durch eine oder mehrere Regalgassen oder Regalebenen oder durch mindestens einen Bereich einer Regalgasse oder Regalebene gebildet werden. Auch die Definition des Zutrittsbereichs unterliegt keiner grundsätzlichen Beschränkung, sodass eine individuelle Definition des Zutrittsbereichs je nach Anwendungsfall möglich ist. In jedem Fall ist ein möglichst kleiner Zutrittsbereich vorteilhaft, um das Lager- und Entnahmesystem in seiner Verfügbarkeit möglichst wenig einzuschränken.

Ausführungsbeispiele der vorliegenden Erfindung können folgende vorteilhafte Merkmale aufweisen:
Eine sichere Position eines Lagerroboters muss nur für einen kurzen Zeitpunkt oder Zeitraum vor oder während des Zutritts einer Person in einen Zutrittsbereich bekannt sein. Ansonsten ist durchgehend nur eine unsichere Position für den Betrieb notwendig. Zu diesem kurzen Zeitpunkt oder in diesem kurzen Zeitraum kann das System überprüfen, welcher Lagerroboter sich im Zutrittsbereich befindet. Nur die Lagerroboter im Zutrittsbereich werden deaktiviert, während die übrigen potentiell gefährlichen Lagerroboter oder Shuttles nach kurzem Stopp zur sicheren Positionsfeststellung wieder weiterfahren können. Dieser Ansatz ist kostengünstig.

Das Verfahren kann für unterschiedliche Lager- und Entnahmesysteme angewendet werden, beispielsweise bei Systemen mit Regalgassen, bei denen Lagerroboter keine Gassenwechsel durchführen können, und auch bei Systemen mit Regalgassen, bei denen Lagerroboter solche Gassenwechsel durchführen können, sowie bei den vorgenannten Systemen mit jeweils einer Roaming-Funktionalität und auch bei Blocklagern, sogenannten Gridstores, falls es mindestens zwei getrennte oder abgrenzbare Bereiche gibt. Die Abgrenzung kann mittels Schranken oder erneut Hebern erfolgen, falls sich die Grid-Schienen auf verschiedenen Höhen befinden.

Die Lager- und Entnahmesysteme können mehrere Fahrschienen und Lagermöglichkeiten sowie automatische Lagerroboter aufweisen, die in verschiedene Zutrittsbereiche fahren können. Bei einem Zutritt wird kurzzeitig ein sicherer Zustand im Zutrittsbereich für alle Lagerroboter geschaffen, die potenziell diesen Bereich befahren könnten. Die potenziell im Zutrittsbereich fahrenden Shuttles fahren auf eine definierte Position, den Referenzpunkt, und fragen einen Token/Freigabe an, um gegebenenfalls weiterfahren zu können. Jede Tür in einem Zutrittsbereich und jede definierte Referenzposition bzw. jeder definierte Referenzpunkt können logisch über eine Tabelle verknüpft sein. Nur die Shuttles im zu betretenden Sicherheitsbereich bzw. Zutrittsbereich werden deaktiviert oder angehalten. Mechanisch kann sichergestellt sein, dass eine Person oder ein Techniker nicht die Zutrittsbereiche wechsein kann, beispielsweise über vorhandene Regale. Das Einfahren weiterer Shuttles kann mechanisch, beispielsweise über eine Schranke, oder elektrisch - ein Heber oder Shuttle-Heber fährt den Zutrittsbereich bei einem angeforderten Zutritt nicht an - verhindert werden. Auch Lichtschranken oder Lichtgitter können dazu genutzt werden. Weiterhin wären auch Schnelllauftore möglich.

Bei einem weiteren Ausführungsbeispiel werden, bevor die Tür geöffnet wird, alle evtl. vorhandenen Tokens gelöscht. Nur die Shuttles oder Lagerroboter, die zu diesem Zeitpunkt an einem Referenzpunkt außerhalb des zu betretenden Zutritts- oder Sicherheitsbereichs sind, können dort über den Referenzpunkt ein neues Token erhalten. Sobald die Tür dann offen ist, werden alle Geräte ohne Token stillgesetzt. Damit werden alle Geräte oder Lagerroboter erfasst, die noch irgendwo gestört oder undefiniert im Lager unterwegs sein könnten oder sind.

Neben dem hier vordergründig komplexen Abschalten der frei bewegliche Shuttles kann es zusätzlich notwendig sein weitere gefährliche ortsfeste Maschinen im Zutrittsbereich, wie z.B. Heber, abzuschalten. Mittels der Türüberwachung ist dies jedoch einfach möglich sowie Stand der Technik, so dass dies im Folgenden nicht explizit erläutert wird.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Verfahrens sowie des erfindungsgemäßen Lager- und Entnahmesystems anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer Draufsicht ein erstes Ausführungsbeispiel des erfindungsgemäßen Lager- und Entnahmesystems, bei dem ein Gassenwechsel und Ebenenwechsel (=Roaming) von Lagerrobotern möglich ist,
- Fig. 2: in einer Seitenansicht das Ausführungsbeispiel aus Fig. 1,
- Fig. 3: eine als Information über den Zutrittsbereich dienende Tabelle, die in einem Lagerroboter abgelegt ist, für das Ausführungsbeispiel aus Fig. 1,
- Fig. 4: in einer Draufsicht ein zweites Ausführungsbeispiel des erfindungsgemäßen Lager- und Entnahmesystems, bei dem Roaming möglich ist,
- Fig. 5: in einer Seitenansicht das Ausführungsbeispiel aus Fig. 4 und
- Fig. 6: eine als Information über den Zutrittsbereich dienende Tabelle, die in einem Lagerroboter abgelegt ist, für das Ausführungsbeispiel aus Fig. 4.

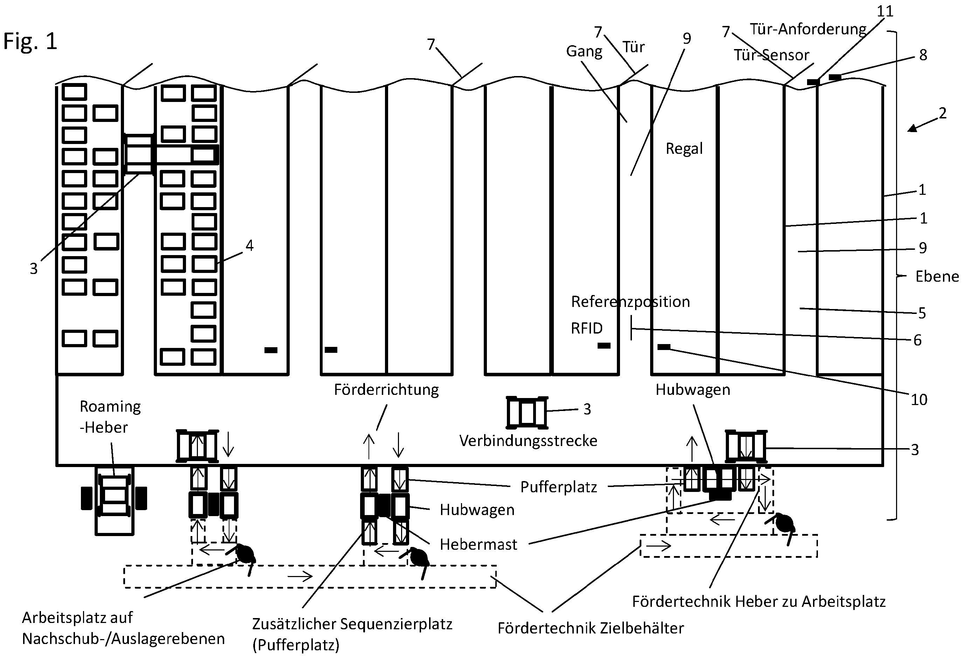

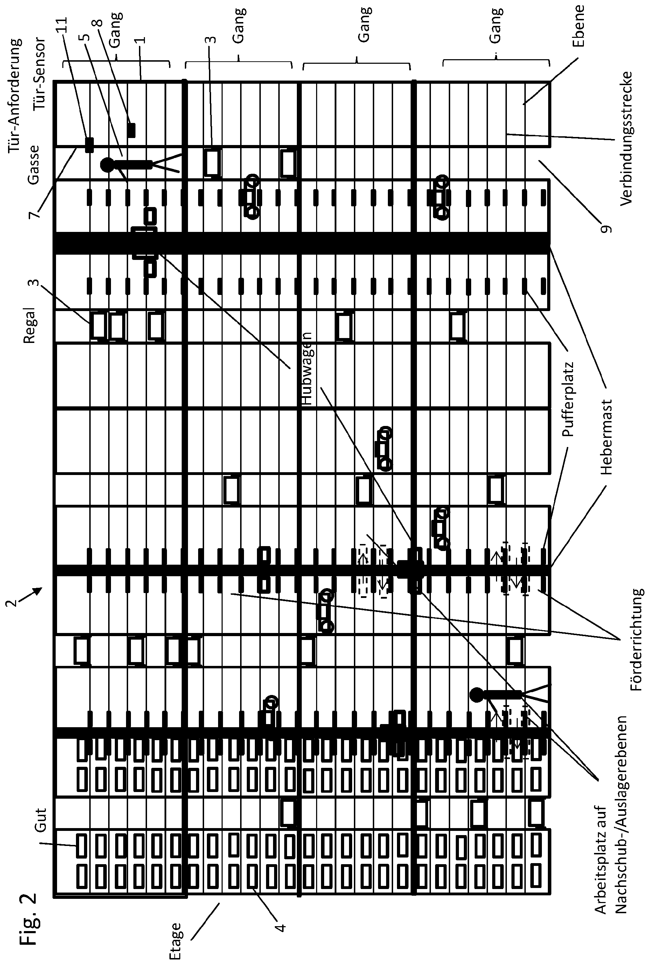

Die Fig. 1 und 2 zeigen in einer Draufsicht sowie in einer Seitenansicht ein erstes Ausführungsbeispiel des erfindungsgemäßen Lager- und Entnahmesystems, wobei das Lager- und Entnahmesystem ein mehrere Lagerregale 1 aufweisendes Regallager 2 mit mehreren in dem Regallager 2 zumindest bereichsweise bewegbaren Lagerrobotern 3 in Form von Shuttles 3 zum Transportieren und/oder Positionieren von Lagergut 4 in dem Regallager 2 aufweist. Ein Zutritt einer Person wird in einem definierbaren Zutrittsbereich 5 des Regallagers 2 ermöglicht, wobei sich mindestens ein Lagerroboter 3 in dem Zutrittsbereich 5 bewegen kann. In dem Regallager 2 sind mehrere Referenzpunkte 6 definiert. Zum Zutritt in einen Zutrittsbereich 5 ist eine Zutrittstür 7 vorgesehen. Mit einem dort angeordneten Schalter 8 kann eine Anforderung für einen Zutritt in den Zutrittsbereich 5 ausgelöst werden. Der Zutrittsbereich 5 umfasst eine Regalgasse 9. An dem Referenzpunkt 6 ist eine RFID-Einrichtung 10 zur Positionsbestimmung für ein Shuttle 3 angeordnet. Der Referenzpunkt 6 bildet eine Referenzposition im Regallager 2. Ein Sensor 11 überwacht den Schließzustand der Zutrittstür 7.

Das Lager- und Entnahmesystem ermöglicht einen Gassenwechsel der Lagerroboter 3. Das Lager- und Entnahmesystem kann mit oder ohne Shuttle-Roaming ausgebildet sein. Bei einer Ausgestaltung mit Roaming ist der Arbeitsbereich eines Shuttles 3 das gesamte Regallager 2. Ist der Sicherheitsbereich eine Etage, so müssen alle Ebenen gesperrt werden, die eine Person bei einem Zutritt gefährden. Die übrigen Etagen können weiterlaufen, wobei ein Roaming-Heber eine Umsetzung von Shuttles 3 verhindert. Bei einem Lager- und Entnahmesystem ohne Shuttle-Roaming ist der Arbeitsbereich eines Shuttles 3 eine Ebene. Ist der Sicherheitsbereich hier ebenfalls eine Etage, so müssen ebenfalls alle Ebenen gesperrt werden, die eine Person bei deren Zutritt gefährden.

Gemäß Fig. 2 sind über einen Gang mehrere Regalebenen mit einem Zugang erreichbar. Eine Etage umfasst mehrere Gänge über mehreren Gassen auf der gleichen Höhe.

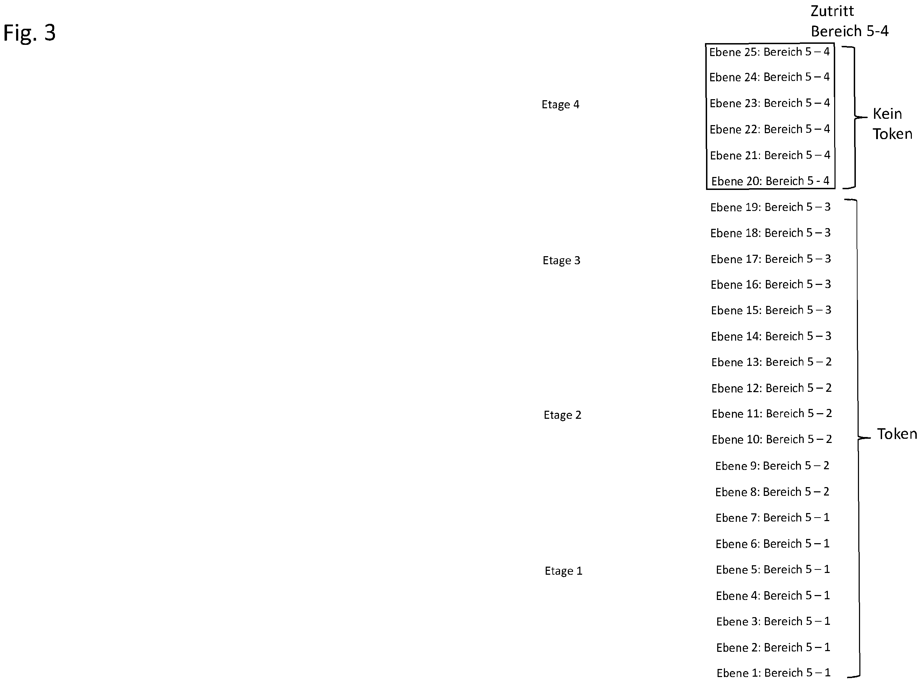

Ein Ablauf bei dem Ausführungsbeispiel des Verfahrens kann beim Zutritt wie folgt sein:
a. Ein Shuttle 3 hat eine Störung, z.B. ein deformierter Karton oder ein Lastaufnahmemittel, LAM, klemmt.
b. Techniker stellt Standort fest.
c. Techniker geht zur naheliegenden Zutrittstür 7.
d. Techniker drückt die Anforderung für den Zutritt, Signal wird an übergeordnete Steuerung übermittelt.
e. Shuttles 3 verlassen falls möglich den Zutrittsbereich 5, beispielsweise falls ein Auftrag in kurzer Zeit beendet ist, ein Folgeauftrag im Nachbargang vorliegt, ein Shuttle 3 nicht defekt ist.
f. Alle potenziell kritischen Shuttles 3 im Zutrittsbereich 5 (bei One-Level-Shuttle, OLS, alle Shuttles 3 in der Gasse; bei One-Level-Shuttle mit möglichem Gassenwechsel, OLSX, alle Shuttles 3 in Etage; bei OLSX mit Roaming alle Shuttles 3 im Lager) fahren zu einem definierten Referenzpunkt 6, hier z.B. eine Ladestation am Gassenanfang.
g. Das Shuttle 3 kann dezentral sicher selbst seine Position am Referenzpunkt 6 über eine RFID-Einrichtung 10 mit zwei RFID-Chips feststellen: dies ist ein kurzer Moment der sicheren Position des Shuttles 3.
h. Das Shuttle 3 vergleicht intern, ob die aktuelle sichere Position im Zutrittsbereich 5 liegt, dazu wird eine Tabelle benutzt, siehe Fig. 3, die eine als Information über den Zutrittsbereich dienende Tabelle zeigt, die in einem Shuttle 3 abgelegt ist: Zutrittsbereich ist 5-4; Keinen Token bei Referenzpunkt 6 der 5-4 Ebene 20 / 5-4 Ebene 21 / 5-4 Ebene 22 / 5-4 Ebene 23 / 5-4 Ebene 24 / 5-4 Ebene 25; alle übrigen Referenzpunkte 6 in der Regalgasse 9 mit der Ordnungsnummer 5 bekommen Token, die übrigen Gassen 9 laufen normal weiter.
i. Alle Shuttles 3 im Zutrittsbereich 5 stehen sicher, der Techniker kann dies durch die Zutrittstür 7 beobachten.
j. Der Techniker öffnet die Zutrittstür 7. Im Ausnahmefall einer unsachgemäßen Bedienung und/oder einem vorzeitigen Öffnen gehen alle potenziell kritischen Shuttles 3 sofort in Not-Halt, da deren Position nicht sicher bekannt ist. Damit wird die Verfügbarkeit reduziert - daher kann es hier vorteilhaft sein, eine Zutrittstür 7 mit Zuhaltung einzusetzen, die im einfachsten Fall über einen Timer von z.B. einer Minute programmiert ist.
k. Ergänzung nur für OLS-Roaming: Die Steuerung des Hebers verhindert sicher, dass kein weiteres Shuttle 3 im Zutrittsbereich 5 abgegeben wird. Der Heber übernimmt damit eine sichere Abgrenzung der Zutrittsbereiche 5.
l. Nachdem der Techniker die Regalgasse 9 verlassen und die Zutrittstür 7 geschlossen hat, wobei die Zutrittstür 7 durch einen Sensor überwacht ist, fahren die sicher deaktivierten Shuttles 3 weiter. Die Steuerung SPC verlangt nun grundsätzlich keinen Token mehr, die Anforderung für Zutritt wird aufgehoben.

Bei einem Lager- und Entnahmesystem mit OLS-Roaming und Batteriebetrieb kann ein Ausführungsbeispiel wie folgt realisiert werden:
Jede Gasse 9 besitzt eine Sicherheitssteuerung (SCP111) und eine SPS Steuerung mit Failsafe. Die SPSen erhalten die Signale der Nothaltschlagtaster und Zutrittsüberwachung der Wartungsbereiche, d.h. Anforderung, Quittierung, Schlüsselschalter, Tür 7 geschlossen etc.

Die Sicherheitssteuerung erhält von der SPS für jeden Wartungsbereich der Gasse 9 ein sicheres Signal über dessen Zustand. In dem Fall bedeutet FALSCH dass der zugehörige Bereich geöffnet ist bzw. zur Öffnung freigegeben ist, d.h. die Tür 7 kann geöffnet werden ohne einen Nothalt der Gesamtanlage zu verursachen.

Die SCP111 können per Fail Safe over EtherCAT, FSoE, sichere Signale über Ethernet und WLAN übertragen. Die zwei Gassen SCP111 tauschen untereinander den Zustand ihrer Bereiche aus und übertragen diese sicheren Signale an die Sicherheitssteuerungen in den OLS 3. Die OLS 3 kommunizieren nur mit der SCP ihrer Gasse, bricht die Verbindung ab geht ein OLS 3 in Nothalt.

Bei Nothalt bremst das OLS 3 alle Motoren mittels Notstop Rampe. Nach einer Verzögerungszeit - beispielsweise 2 Sekunden - werden über einen Schütz alle Motoren in Safe Torque Off, STO, geschaltet. Die Funktion des Schütz wird mittels Rückkopplung überwacht. Sind alle Bereiche einer Gasse gleichzeitig offen, zählt dies als Nothalt für die OLS 3.

Die Kommunikation der Gassen SCPs untereinander ist optional. Ist eine Gassen SCP aus oder die Kommunikation funktioniert aus anderen Gründen nicht, werden die Bereiche der nicht erreichbaren Gassen 9 als offen gewertet. Das Lager gilt dann als nicht komplett geschlossen. Nur wenn das Lager komplett geschlossen ist können die OLS 3 selbstständig Initialisierungsfahrten ausführen.

### Automatik Freigabe Token

Sind Wartungsbereiche geöffnet, benötigt ein OLS 3 für Automatikbewegungen eine sichere Freigabe, die Token genannt ist. Nur OLS 3 in geschlossenen Bereichen können einen Token erhalten. Ein OLS 3 ermittelt den Bereich, in dem es sich befindet, über zwei RFID Tags an der ersten Position der Lagerebene. Jedes Tag enthält seine Koordinate im Lager - Position X, Ebene Y und Gasse Z - und eine CRC Prüfsumme der Koordinate. Diese werden von zwei, sich gegenüber liegenden RFID Sensoren ausgelesen, welche von den zwei SPSen im OLS 3 angesteuert werden. Diese Redundanz ist notwendig, da es sich um nicht-sichere Sensoren handelt. Jede SPS rechnet die CRC Prüfsumme des selbst ausgelesenen Tags nach und von den Tag-Daten, die sie von der anderen SPS bekommt. Des Weiteren vergleichen sie die Koordinaten der zwei Tags. Stimmen Prüfsumme oder Tags nicht überein, kann das OLS 3 keinen Token bekommen. Wenn die Tag-Daten laut den nicht-fehlersicheren SPSen korrekt sind, werden sie als unsichere Variablen an die Sicherheitssteuerung des OLS 3 übergeben. Diese führt einen Vergleich der Koordinaten aus und berechnet dann sicher, in welchem Wartungsbereich das OLS 3 sich befindet. Ist zu diesem Zeitpunkt der Bereich verriegelt (= abgeschottet zum Techniker, also keine Gefährdung), erhält das OLS 3 einen Token. Andernfalls fällt der Schütz und die Antriebe werden in STO geschaltet.

Drücken des lokalen Nothaltschlagtasters am OLS 3 löscht den Token sicher.

Der Shuttle Heber stellt sicher, dass keine OLS 3 in einen geöffneten Bereich versetzt werden.

### Trennung der Gassen

Die OLS 3 können nur in ihrer Gasse Token erhalten. Bei jeder Token-Generierung wird geprüft, ob es sich laut Tag-Daten in der korrekten Gasse 9 befindet. Ist dies nicht der Fall, wird STO ausgelöst. Nach einem Neustart des OLS 3 bzw. der SCP davon, muss es an die Position mit den RFID Tags geschoben werden zwecks Initialprüfung der Gasse 9.

Automatisch initialisieren kann das OLS 3 nur, wenn es zuletzt in der richtigen Gasse 9 war und alle Bereiche aller Gassen 9 verschlossen sind.

Sollte ein OLS 3 aus der korrekten Gasse 9 in eine andere Gasse 9 gestellt werden, ohne dass die SCP einen Reset erfährt, z.B. durch Spannungslosigkeit, hat das OLS 3 die STO-Freigabe solange, wie kein Bereich des Lagers 2 geöffnet ist. Das OLS 3 wird stillgelegt, sobald es ein RFID-Tag der falschen Gasse 9 liest.

### Zutritt

Bei Zutritts-Anforderung werden alle OLS 3 der angeforderten Gasse 9 an die Position mit RFID Tags beordert. Erst wenn alle fehlerfreien OLS 3 dort stehen darf die Tür zur Öffnung freigegeben werden. Sobald die Gassen SCP mitgeteilt bekommt dass ein Bereich entriegelt wurde, löst dies bei allen OLS 3 der Gasse 9 die Token-generierung aus. Kann ein OLS 3 dann keinen Token generieren geht es in Nothalt.

Wird ein Bereich verriegelt in dem ein OLS 3 ohne Token ist, kann es sich selbständig reintegrieren, sofern es an der Position mit den RFID Tags steht.

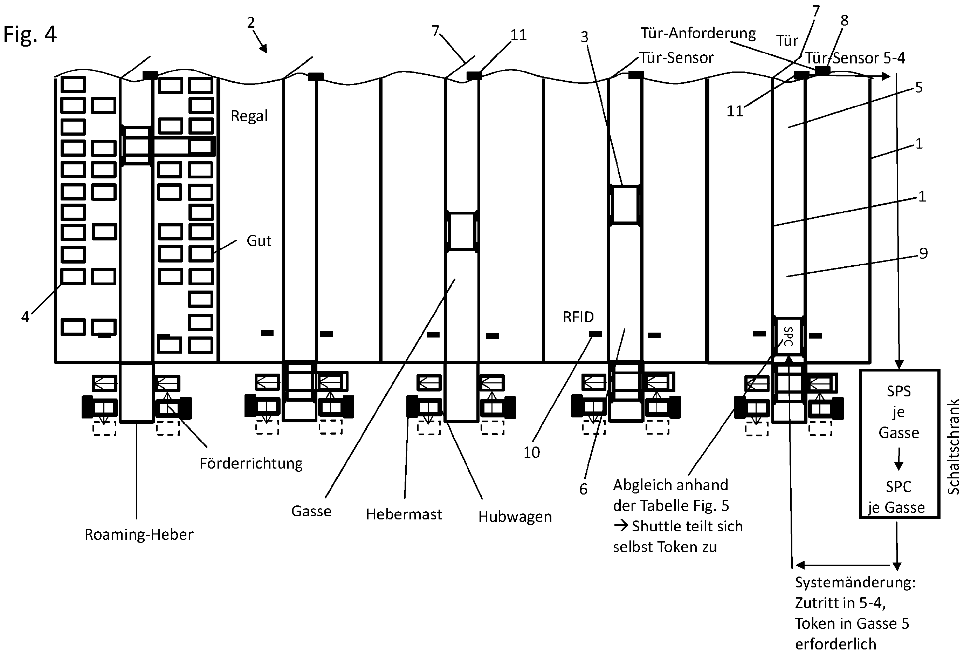

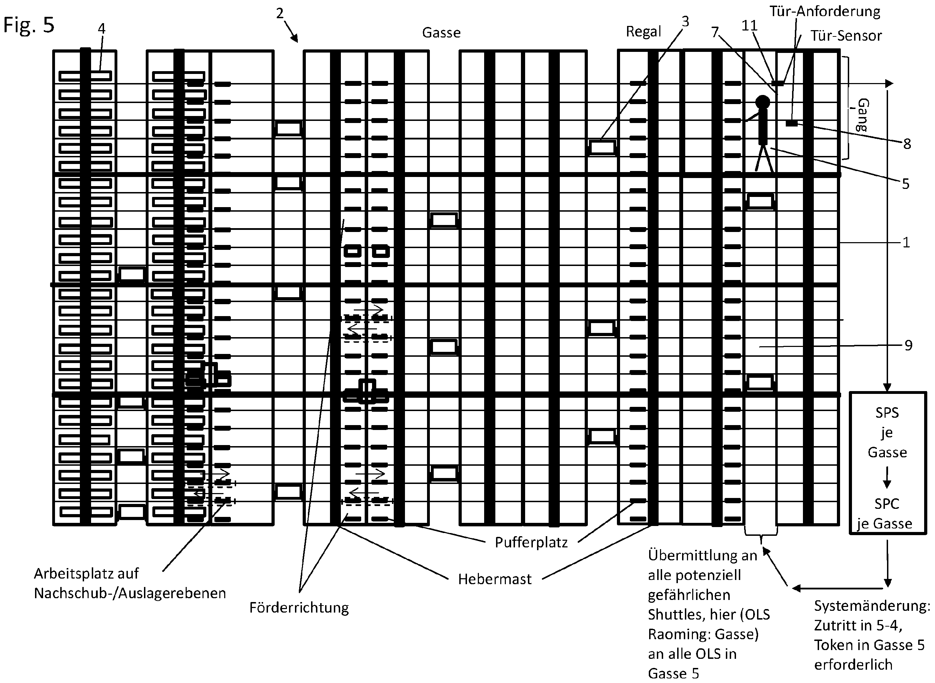

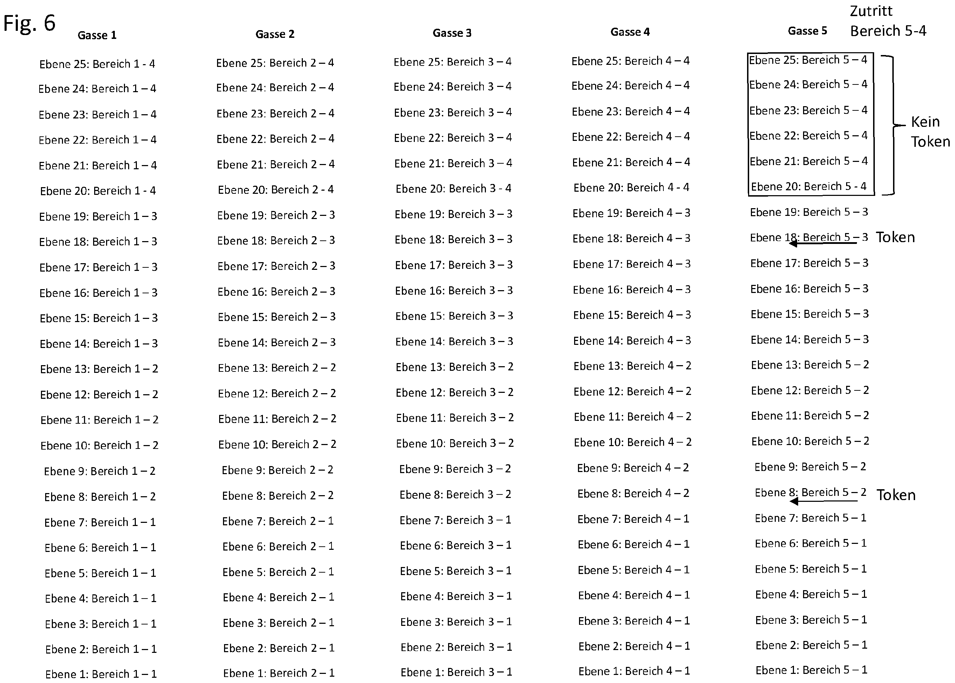

Die Fig. 4 und 5 zeigen in einer Draufsicht sowie in einer Seitenansicht ein zweites Ausführungsbeispiel des erfindungsgemäßen Lager- und Entnahmesystems, bei dem Roaming möglich ist. Fig. 6 zeigt eine als Information über den Zutrittsbereich 5 dienende Tabelle, die in einem Lagerroboter 3 abgelegt ist, für das Ausführungsbeispiel aus Fig. 4. Zur Vermeidung von Wiederholungen darf hinsichtlich der Beschreibung des Lager- und Entnahmesystems des zweiten Ausführungsbeispiels auf die Beschreibung zum ersten Ausführungsbeispiel verwiesen werden, wobei gleiche Bezugsziffern gleiche Bauteile bezeichnen.

Das Lager- und Entnahmesystem kann mit oder ohne Shuttle-Roaming ausgebildet sein. Bei einer Ausgestaltung mit Roaming ist der Arbeitsbereich eines Shuttles 3 eine Gasse 9. Ist der Sicherheitsbereich ein Gang, so müssen alle Ebenen gesperrt werden, die eine Person bei einem Zutritt gefährden. Die übrigen Etagen können weiterlaufen, wobei ein Roaming-Heber eine Umsetzung von Shuttles 3 verhindert. Bei einem Lager- und Entnahmesystem ohne Shuttle-Roaming ist der Arbeitsbereich eines Shuttles 3 eine Ebene. Ist der Sicherheitsbereich hier ebenfalls ein Gang, so müssen ebenfalls alle Ebenen gesperrt wären, die eine Person bei deren Zutritt gefährden.

Hinsichtlich weiterer vorteilhafter Ausgestaltungen des erfindungsgemäßen Verfahrens sowie der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Lagerregal
- 2: Regallager
- 3: Lagerroboter, Shuttle
- 4: Lagergut
- 5: Zutrittsbereich
- 6: Referenzpunkt
- 7: Zutrittstür
- 8: Schalter
- 9: Regalgasse
- 10: RFID-Einrichtung

## Patentansprüche

1. Verfahren zum Betreiben eines Lager- und Entnahmesystems, wobei das Lager- und Entnahmesystem ein Regallager (2) mit mindestens einem Lagerregal (1) und mindestens einen zumindest bereichsweise in dem Regallager (2) bewegbaren Lagerroboter (3) zum Transportieren und/oder Positionieren von Lagergut (4) in dem Regallager (2) aufweist und wobei ein Zutritt einer Person in einen definierbaren Zutrittsbereich (5) des Regallagers (2), in dem sich der mindestens eine Lagerroboter (3) zumindest bereichsweise bewegen kann, ermöglicht wird, mit den folgenden Schritten:
- Auslösen einer Anforderung an eine Steuerung für einen Zutritt in den Zutrittsbereich (5);
- Veranlassen des mindestens einen Lagerroboters (3), auf die Anforderung hin und mittels eines Steuerbefehls durch die Steuerung an den mindestens einen Lagerroboter (3), zur Bewegung an einen hinsichtlich einer Position im Regallager (2) definierten Referenzpunkt (6) des Regallagers (2);
- Ermitteln, sobald sich der mindestens eine Lagerroboter (3) in einer definierbaren Umgebung des Referenzpunkts (6) oder direkt am Referenzpunkt (6) befindet, durch den mindestens einen Lagerroboter (3) anhand einer, dem Referenzpunkt (6) zugeordneten oder übermittelten und von dem mindestens einen Lagerroboter (3) erhaltenen oder erkannten, Information über den Zutrittsbereich (5), ob sich der Referenzpunkt (6) und damit auch der mindestens eine Lagerroboter (3) in dem Zutrittsbereich (5) befindet oder nicht; und
- Verbleiben des mindestens einen Lagerroboters (3) in einem angehaltenen Zustand in der Umgebung des Referenzpunkts (6) oder am Referenzpunkt (6), falls sich der Referenzpunkt (6) in dem Zutrittsbereich (5) befindet, sodass der Zutritt der Person in den Zutrittsbereich (5) möglich ist, und/oder Anhalten aller Lagerroboter (3) im Zutrittsbereich (5), die innerhalb eines bestimmten Zeitfensters keinen Referenzpunkt (6) oder keine Umgebung eines Referenzpunkts (6) anfahren konnten und/oder angefahren haben und dort eine Freigabe/Token bezogen haben, so dass der Zutritt der Person in den Zutrittsbereich (5) möglich ist.

2. Verfahren nach Anspruch 1, **dadurch gekennzeichnet, dass** für das Auslösen der Anforderung eine zu einer drahtlosen oder drahtgebundenen Kommunikation mit der Steuerung geeignete Auslöseeinrichtung verwendet wird, wobei vorzugsweise die Auslöseeinrichtung in der Nähe des Zutrittsbereichs (5) oder an oder in der Nähe einer Zutrittstür (7) zu dem Zutrittsbereich (5) angeordnet ist und wobei weiter vorzugsweise die Auslöseeinrichtung einen Signalgeber oder einen Schalter (8), beispielsweise Schlüsselschalter, aufweist.

3. Verfahren nach Anspruch 1 oder 2, **dadurch gekennzeichnet, dass** ein oder mehrere geeignete Lagerroboter (3) - nach dem Auslösen der Anforderung - durch die Steuerung veranlasst werden, den Zutrittsbereich (5) zu verlassen.

4. Verfahren nach einem der Ansprüche 1 bis 3, **dadurch gekennzeichnet, dass** das Regallager (2) mehrere definierte Referenzpunkte (6) aufweist und/oder dass ein oder mehrere definierte Referenzpunkte (6) durch eine Ladestation, beispielsweise an einem Anfang einer Regalgasse (9), gebildet werden oder eine solche Ladestation aufweisen.

5. Verfahren nach einem der Ansprüche 1 bis 4, **dadurch gekennzeichnet, dass** der mindestens eine Lagerroboter (3) seine Position in der definierbaren Umgebung des Referenzpunkts (6) oder an dem Referenzpunkt (6), vorzugsweise mittels mindestens zwei RFID-Einrichtungen (10), zumindest kurzzeitig sicher feststellt.

6. Verfahren nach einem der Ansprüche 1 bis 5, **dadurch gekennzeichnet, dass** der mindestens eine Lagerroboter (3) in der definierbaren Umgebung des Referenzpunkts (6) oder an dem Referenzpunkt (6) nach einem Token oder nach einer Freigabe zur Weiterfahrt anfragt und/oder eine Vergabe eines Tokens oder Freigabe zur Weiterfahrt prüft.

7. Verfahren nach einem der Ansprüche 1 bis 6, **dadurch gekennzeichnet, dass** die Information über den Zutrittsbereich auf einer Verknüpfung oder Zuordnung des oder der Referenzpunkte (6) oder der durch den mindestens einen Lagerroboter (3) festgestellten Position mit oder zu dem Zutrittsbereich (5), der Auslöseeinrichtung oder einer Zutrittstür (7) zu dem Zutrittsbereich (5) basiert, wobei vorzugsweise die Information über den Zutrittsbereich (5), die Verknüpfung oder die Zuordnung anhand einer Tabelle oder in Form einer tabellarischen Information dokumentiert ist.

8. Verfahren nach einem der Ansprüche 1 bis 7, **dadurch gekennzeichnet, dass** das Regallager (2) mindestens eine Absperreinrichtung zur zumindest bereichsweisen physischen oder elektrischen Absperrung des Zutrittsbereichs (5) oder mindestens eines Unterbereichs des Zutrittsbereichs (5) aufweist, wobei vorzugsweise die Absperreinrichtung über die Steuerung, über eine Elektronik des Referenzpunkts (6) oder über den mindestens einen Lagerroboter (3) aktiviert wird.

9. Verfahren nach Anspruch 8, **dadurch gekennzeichnet, dass** die Absperreinrichtung eine oder mehrere Schranken aufweist und/oder durch den mindestens einen Lagerroboter (3) gebildet wird.

10. Verfahren nach einem der Ansprüche 1 bis 9, **dadurch gekennzeichnet, dass** bei einem vorzeitigen Zutritt in den Zutrittsbereich (5) oder bei einem vorzeitigen Öffnen einer Zutrittstür (7) zu dem Zutrittsbereich (5) der mindestens eine Lagerroboter (3) oder sämtliche in dem Zutrittsbereich (5) oder in dem Zutrittsbereich (5) und zusätzlich in einem definierbaren Umfeld um den Zutrittsbereich (5) zum Zeitpunkt oder kurz nach dem Zeitpunkt des vorzeitigen Zutritts befindliche Lagerroboter (3) angehalten werden.

11. Verfahren nach Anspruch 10, **dadurch gekennzeichnet, dass** eine Zutrittstür (7) eine während einer vorgebbaren Zeit wirkende - beispielsweise über einen Timer gesteuerte Zuhaltung aufweist.

12. Verfahren nach einem der Ansprüche 1 bis 11, **dadurch gekennzeichnet, dass** einzelnen Regalgassen (9) des Regallagers (2) zugeordnete Steuerungen zur Kommunikation untereinander ausgebildet sind und/oder dass einzelne Regalgassen (9) des Regallagers (2) als offen gelten, falls eine jeweilige Steuerung ausgeschaltet ist oder eine Fehlfunktion aufweist.

13. Verfahren nach einem der Ansprüche 1 bis 12, **dadurch gekennzeichnet, dass** nach dem Ermöglichen des Zutritts in den Zutrittsbereich (5) oder bei einer Freigabe des Zutrittsbereichs (5) oder durch eine Öffnung einer Zutrittstür (7) eine Generierung eines Tokens für eine Weiterfahrt oder eine weitere Bewegung des mindestens einen Lagerroboters (3) erforderlich wird.

14. Verfahren nach einem der Ansprüche 1 bis 13, **dadurch gekennzeichnet, dass** der mindestens eine Lagerroboter (3) durch ein Shuttle (3), ein Regalbediengerät oder eine sonstige bewegbare Einheit zum Transportieren und/oder Positionieren von Lagergut (4) in dem Regallager (2) gebildet wird und/oder dass der Zutrittsbereich (5) durch eine oder mehrere Regalgassen (9) oder Regalebenen oder durch mindestens einen Bereich einer Regalgasse (9) oder Regalebene gebildet wird.

15. Lager- und Entnahmesystem, insbesondere zur Durchführung des Verfahrens zum Betreiben eines Lager- und Entnahmesystems nach einem der Ansprüche 1 bis 14, wobei das Lager- und Entnahmesystem ein Regallager (2) mit mindestens einem Lagerregal (1) und mindestens einen zumindest bereichsweise in dem Regallager (2) bewegbaren Lagerroboter (3) zum Transportieren und/oder Positionieren von Lagergut (4) in dem Regallager (2) aufweist und wobei ein Zutritt einer Person in einen definierbaren Zutrittsbereich (5) des Regallagers (2), in dem sich der mindestens eine Lagerroboter (3) zumindest bereichsweise bewegen kann, ermöglicht werden kann, wobei das Lager- und Entnahmesystem aufweist:
eine Auslöseeinrichtung zum Auslösen einer Anforderung an eine Steuerung für einen Zutritt in den Zutrittsbereich (5),
- wobei die Steuerung dazu ausgebildet ist, den mindestens einen Lagerroboter (3), auf die Anforderung hin und mittels eines Steuerbefehls durch die Steuerung an den mindestens einen Lagerroboter (3), zur Bewegung an einen hinsichtlich einer Position im Regallager (2) definierten Referenzpunkt (6) des Regallagers (2) zu veranlassen;
- wobei der mindestens eine Lagerroboter (3) dazu ausgebildet ist, sobald sich der mindestens eine Lagerroboter (3) in einer definierbaren Umgebung des Referenzpunkts (6) oder direkt am Referenzpunkt (6) befindet, anhand einer, dem Referenzpunkt (6) zugeordneten oder übermittelten und von dem mindestens einen Lagerroboter (3) erhaltenen oder erkannten, Information über den Zutrittsbereich (5) zu ermitteln, ob sich der Referenzpunkt (6) und damit auch der mindestens eine Lagerroboter (3) in dem Zutrittsbereich (5) befindet oder nicht; und
- wobei der mindestens eine Lagerroboter (3) dazu ausgebildet ist, in einem angehaltenen Zustand in der Umgebung des Referenzpunkts (6) oder am Referenzpunkt (6) zu verbleiben, falls sich der Referenzpunkt (6) in dem Zutrittsbereich (5) befindet, sodass der Zutritt der Person in den Zutrittsbereich (5) möglich ist, und/oder
wobei alle Lagerroboter (3) dazu ausgebildet sind, im Zutrittsbereich (5) angehalten zu werden, falls sie innerhalb eines bestimmten Zeitfensters keinen Referenzpunkt (6) oder keine Umgebung eines Referenzpunkts (6) anfahren konnten und/oder angefahren haben und dort eine Freigabe/Token bezogen haben, so dass der Zutritt der Person in den Zutrittsbereich (5) möglich ist.

## Claims

1. Method for operating a storage and removal system, wherein the storage and removal system has a shelf warehouse (2) having at least one storage shelf (1) and at least one storage robot (3) which can be moved at least partially in the shelf warehouse (2) for transporting and/or positioning stored goods (4) in the shelf warehouse (2) and wherein an access of a person into a definable access region (5) of the shelf warehouse (2) in which the at least one storage robot (3) can move at least partially is enabled, having the following steps:
- initiating a request to a control unit for access into the access region (5);
- causing the at least one storage robot (3), in response to the request and by means of a control instruction by the control unit to the at least one storage robot (3), to move to a reference point (6) of the shelf warehouse (2) which is defined with respect to a position in the shelf warehouse (2) ;
- establishing, as soon as the at least one storage robot (3) is located in a definable environment of the reference point (6) or directly at the reference point (6), by means of the at least one storage robot (3) with reference to an information item which relates to the access region (5) and which is associated with or transmitted to the reference point (6) and which is obtained or identified by the at least one storage robot (3), whether the reference point (6) and consequently also the at least one storage robot (3) is located in the access region (5) or not; and
- maintaining the at least one storage robot (3) in a stopped state in the environment of the reference point (6) or on the reference point (6) if the reference point (6) is located in the access region (5) so that the access of the person into the access region (5) is possible, and/or stopping all the storage robots (3) in the access region (5) which could not approach and/or have not approached a reference point (6) or an environment of a reference point (6) within a specific timeframe and have obtained a release/token at that location so that the access of the person into the access region (5) is possible.

2. Method according to claim 1, **characterised in that** for the initiation of the request an initiating device which is suitable for a wireless or wired communication with the control unit is used, wherein the initiating device is preferably arranged in the vicinity of the access region (5) or on or in the vicinity of an access door (7) to the access region (5) and wherein, in a further preferred manner, the initiating device has a signal transmitter or a switch (8), for example, a key switch.

3. Method according to claim 1 or 2, **characterised in that** one or more suitable storage robots (3) - after the request has been initiated - are caused by the control unit to leave the access region (5).

4. Method according to any one of claims 1 to 3, **characterised in that** the shelf warehouse (2) has a plurality of defined reference points (6) and/or **in that** one or more defined reference points (6) are formed by means of a loading station, for example, at the beginning of a shelf aisle (9), or have such a loading station.

5. Method according to any one of claims 1 to 4, **characterised in that** the at least one storage robot (3) at least temporarily safely determines its position in the definable environment of the reference point (6) or at the reference point (6), preferably by means of at least two RFID devices (10).

6. Method according to any one of claims 1 to 5, **characterised in that** the at least one storage robot (3) in the definable environment of the reference point (6) or at the reference point (6) requests a token or a release for further travel and/or verifies an allocation of a token or release for further travel.

7. Method according to any one of claims 1 to 6, **characterised in that** the information item relating to the access region is based on a linking or association of the reference point(s) (6) or the position determined by the at least one storage robot (3) with the access region (5), the initiating device or an access door (7) to the access region (5), wherein the information item relating to the access region (5), the linking or the association is preferably documented on the basis of a table or in the form of tabular information.

8. Method according to any one of claims 1 to 7, **characterised in that** the shelf warehouse (2) has at least one blocking device for at least partial physical or electrical blocking of the access region (5) or at least a lower region of the access region (5), wherein the blocking device is preferably activated by means of the control unit, by means of an electronic system of the reference point (6) or by means of the at least one storage robot (3).

9. Method according to claim 8, **characterised in that** the blocking device has one or more barriers and/or is formed by means of the at least one storage robot (3).

10. Method according to any one of claims 1 to 9, **characterised in that**, in the event of premature access into the access region (5) or in the event of premature opening of an access door (7) to the access region (5), the at least one storage robot (3) or all the storage robots (3) which are located in the access region (5) or in the access region (5) and additionally in a definable environment around the access region (5) at the time or shortly after the time of the premature access are stopped.

11. Method according to claim 10, **characterised in that** an access door (7) has a closure member which is active for a predeterminable period of time - for example, controlled by a timer.

12. Method according to any one of claims 1 to 11, **characterised in that** control units for mutual communication which are associated with individual shelf aisles (9) of the shelf warehouse (2) are formed and/or **in that** individual shelf aisles (9) of the shelf warehouse (2) are considered to be open if a respective control unit is switched off or has a malfunction.

13. Method according to any one of claims 1 to 12, **characterised in that**, after access to the access region (5) has been enabled or when the access region (5) has been released or by an access door (7) being opened, a generation of a token for continued travel or further movement of the at least one storage robot (3) is necessary.

14. Method according to any one of claims 1 to 13, **characterised in that** the at least one storage robot (3) is formed by means of a shuttle (3), a shelf operating device or other movable unit for transporting and/or positioning stored goods (4) in the shelf warehouse (2) and/or **in that** the access region (5) is formed by means of one or more shelf aisles (9) or shelf planes or by means of at least one region of a shelf aisle (9) or shelf plane.

15. Storage and removal system, in particular for carrying out the method for operating a storage and removal system according to any one of claims 1 to 14, wherein the storage and removal system has a shelf warehouse (2) having at least one storage shelf (1) and at least one storage robot (3) which can be moved at least partially in the shelf warehouse (2) for transporting and/or positioning stored goods (4) in the shelf warehouse (2) and wherein an access of a person into a definable access region (5) of the shelf warehouse (2) in which the at least one storage robot (3) can move at least partially can be enabled, wherein the storage and removal system has:
an initiating device for initiating a request to a control unit for access into the access region (5),
- wherein the control unit is constructed to cause the at least one storage robot (3), in response to the request and by means of a control instruction by the control unit to the at least one storage robot (3), to move to a reference point (6) of the shelf warehouse (2) which is defined with regard to a position in the shelf warehouse (2);
- wherein the at least one storage robot (3) is constructed, as soon as the at least one storage robot (3) is located in a definable environment of the reference point (6) or directly at the reference point (6), with reference to an information item which relates to the access region (5) and which is associated with or transmitted to the reference point (6) and which is obtained or identified by the at least one storage robot (3), to establish whether the reference point (6) and consequently also the at least one storage robot (3) is located in the access region (5) or not; and
- wherein the at least one storage robot (3) is constructed to remain in a stopped state in the environment of the reference point (6) or at the reference point (6) if the reference point (6) is located in the access region (5) so that the access of the person into the access region (5) is possible and/or
wherein all the storage robots (3) are constructed to be stopped in the access region (5) if they could not approach and/or have not approached a reference point (6) or an environment of a reference point (6) within a specific timeframe and have obtained a release/token at that location so that the access of the person into the access region (5) is possible.

## Revendications

1. Procédé de fonctionnement d'un système de stockage et de prélèvement, dans lequel le système de stockage et de prélèvement comprend un rayonnage (2) avec au moins un rayon de stockage (1) et au moins un robot de stockage (3), mobile au moins à certains endroits dans le rayonnage (2), pour le transport et/ou le positionnement d'un article stocké (4) dans le rayonnage (2) et dans lequel l'accès d'une personne à une zone d'accès définissable (5) du rayonnage (2), dans laquelle l'au moins un robot de stockage (3) peut se déplacer au moins à certains endroits, est autorisé, avec les étapes suivantes :
- déclenchement d'une demande à un dispositif de commande pour un accès à la zone d'accès (5) ;
- envoi d'un ordre à l'au moins un robot de stockage (3), lors de la demande, et au moyen d'une instruction de commande par le dispositif de commande à l'au moins un robot de stockage (3), de se déplacer vers un point de référence (6) du rayonnage (2) défini en ce qui concerne une position dans le rayonnage (2) ;
- détermination, dès que l'au moins un robot de stockage (3) se trouve dans un environnement définissable du point de référence (6) ou directement au niveau du point de référence (6), par l'au moins un robot de stockage (3) à l'aide d'une information concernant la zone d'accès (6), correspondant ou transmise au point de référence (6) et obtenue ou détectée par l'au moins un robot de stockage (3), si le point de référence (6) et donc également l'au moins un robot de stockage (3) se trouve dans la zone d'accès (5) ou non ; et
- maintien de l'au moins un robot de stockage (3) dans un état arrêté dans l'environnement du point de référence (6) ou au point de référence (6), si le point de référence (6) se trouve dans la zone d'accès (5), de sorte que l'accès de la personne à la zone d'accès (5) est possible et/ou arrêt de tous les robots de stockage (3) de la zone d'accès (5) qui n'ont pu s'approcher ou ne se sont approchés, dans une fenêtre de temps déterminée, d'aucun point de référence (6) ou d'aucun environnement d'un point de référence (6) et y ont récupéré une validation / un jeton, de sorte que l'accès de la personne dans la zone d'accès (5) est possible.

2. Procédé selon la revendication 1, **caractérisé en ce que**, pour le déclenchement de la demande, un dispositif de déclenchement adapté, en communication sans fil ou filaire avec le dispositif de commande, est utilisé, dans lequel, de préférence, le dispositif de déclenchement est disposé à proximité de la zone d'accès (5) ou au niveau ou à proximité d'une porte d'accès (7) à la zone d'accès (5), et dans lequel, également de préférence, le dispositif de déclenchement comprend un générateur de signaux ou un commutateur (8), par exemple un commutateur à clé.

3. Procédé selon la revendication 1 ou 2, **caractérisé en ce qu'**un ou plusieurs robots de stockage (3) adaptés sont contraints - après le déclenchement de la demande - par le dispositif de commande, à quitter la zone d'accès (5).

4. Procédé selon l'une des revendications 1 à 3, **caractérisé en ce que** le rayonnage (2) comprend plusieurs points de référence (6) définis et/ou **en ce qu'**un ou plusieurs points de référence (6) définis sont constitués d'une station de charge, par exemple au début d'une allée de rayonnages (9), ou présentent une telle station de charge.

5. Procédé selon l'une des revendications 1 à 4, **caractérisé en ce que** l'au moins un robot de stockage (3) détermine de manière sûre, au moins brièvement, sa position dans l'environnement définissable du point de référence (6) ou au niveau du point de référence (6), de préférence au moyen d'au moins deux dispositifs RFID (10).

6. Procédé selon l'une des revendications 1 à 5, **caractérisé en ce que** l'au moins un robot de stockage (3) demande, dans l'environnement du point de référence (6) ou au niveau du point de référence (6), un jeton ou une validation pour la continuation du déplacement et/ou vérifie l'obtention d'un jeton ou d'une validation pour la continuation du déplacement.

7. Procédé selon l'une des revendications 1 à 6, **caractérisé en ce que** l'information concernant la zone d'accès est basée sur une association ou une attribution du ou des points de référence (6) ou de la position déterminée par l'au moins un robot de stockage (3) avec ou à la zone d'accès (5), le dispositif de déclenchement ou la porte d'accès (7) à la zone d'accès (5), dans lequel, de préférence, l'information concernant la zone d'accès (5), l'association ou l'attribution est documentée à l'aide d'un tableau ou d'une information sous forme de tableau.

8. Procédé selon l'une des revendications 1 à 7, **caractérisé en ce que** le rayonnage (2) comprend au moins un dispositif de blocage pour le blocage physique ou électrique, au moins à certains endroits, de la zone d'accès (5) ou d'au moins une sous-zone de la zone d'accès (5), dans lequel, de préférence, le dispositif de blocage est activé par l'intermédiaire du dispositif de commande, par l'intermédiaire d'une électronique du point de référence (6) ou par l'intermédiaire de l'au moins un robot de stockage (3).

9. Procédé selon la revendication 8, **caractérisé en ce que** le dispositif de blocage comprend une ou plusieurs barrières et/ou est constitué par l'au moins un robot de stockage (3).

10. Procédé selon l'une des revendications 1 à 9, **caractérisé en ce que**, lors d'un accès prématuré à la zone d'accès (5) ou lors d'une ouverture prématurée d'une porte d'accès (7) à la zone d'accès (5), l'au moins un robot de stockage (3) ou tous les robots de stockage (3) se trouvant dans la zone d'accès (5) ou dans la zone d'accès (5) et en outre dans un environnement définissable autour de la zone d'accès (5), sont arrêtés au moment ou peu après le moment de l'accès prématuré.

11. Procédé selon la revendication 10, **caractérisé en ce qu'**une porte d'accès (7) comprend une gâchette contrôlée - par exemple par l'intermédiaire d'une minuterie - agissant pendant un temps prédéterminé.

12. Procédé selon l'une des revendications 1 à 11, **caractérisé en ce que** différentes allées de rayonnage (6) du rayonnage (2) comprennent des dispositifs de commande correspondantes pour une communication entre elles et/ou **en ce que** différentes allées de rayonnage (9) du rayonnage (2) sont considérées comme ouvertes si un dispositif de commande correspondant est désactivé ou présente un dysfonctionnement.

13. Procédé selon l'une des revendications 1 à 12, **caractérisé en ce que**, après l'autorisation de l'accès à al zone d'accès (5) ou lors d'une validation de la zone d'accès (5) ou du fait d'une ouverture d'une porte d'accès (7), une génération d'un jeton est nécessaire pour la continuation du trajet ou un déplacement supplémentaire de l'au moins un robot de stockage (3).

14. Procédé selon l'une des revendications 1 à 13, **caractérisé en ce que** l'au moins un robot de stockage (3) est constitué d'une navette (3), d'un appareil de commande de rayonnage ou d'une autre unité mobile pour le transport et/ou le positionnement d'un article stocké (4) dans le rayonnage (2) et/ou **en ce que** la zone d'accès (5) est constituée d'une ou plusieurs allées de rayonnage (9) ou de niveaux de rayonnage ou d'au moins une partie d'une allée de rayonnage (9) ou d'un niveau de rayonnage.

15. Système de stockage et de prélèvement, plus particulièrement pour l'exécution du procédé de fonctionnement d'un système de stockage et de prélèvement selon l'une des revendications 1 à 14, dans lequel le système de stockage et de prélèvement comprend un rayonnage (2) avec au moins un rayon de stockage (1) et au moins un robot de stockage (3), mobile au moins à certains endroits dans le rayonnement (2), pour le transport et/ou le positionnement d'un article stocké (4) dans le rayonnage (2) et dans lequel un accès d'une personne à une zone d'accès (5) définissable du rayonnage (2), dans laquelle l'au moins un robot de stockage (3) peut se déplacer au moins à certains endroits, peut être autorisé, dans lequel le système de stockage et de prélèvement comprend :
un dispositif de déclenchement pour le déclenchement d'une demande à un dispositif de commande pour un accès à la zone d'accès (5),
- dans lequel le dispositif de commande est conçu pour faire en sorte que l'au moins un robot de stockage (3), à la demande et au moyen d'une instruction de commande par le dispositif de commande sur l'au moins un robot de stockage (3), se déplace vers un point de référence (6) du rayonnage (2), défini en ce qui concerne une position dans le rayonnage (2) ;
- dans lequel l'au moins un robot de stockage (3) est conçu, dès que l'au moins un robot de stockage (3) se trouve dans un environnement défini du point de référence (6) ou directement au niveau du point de référence (6), pour déterminer, à l'aide d'une information, correspondant ou transmise au point de référence (6) et obtenue ou détectée par l'au moins un robot de stockage (3), concernant la zone d'accès (5), si le point de référence (6) et donc également l'au moins un robot de stockage (3) se trouve dans la zone d'accès (5) ou non ; et
- dans lequel l'au moins un robot de stockage (3) est conçu pour rester dans un état arrêté dans l'environnement du point de référence (6) ou au niveau du point de référence (6), si le point de référence (6) se trouve dans la zone d'accès (5), de sorte que l'accès de la personne à la zone d'accès (5) est possible et/ou
dans lequel tous les robots de stockage (3) de la zone d'accès (5) sont arrêtés s'ils n'ont pu s'approcher ou ne se sont approchés, dans une fenêtre de temps déterminée, d'aucun point de référence (6) ou d'aucun environnement d'un point de référence (6) et y ont récupéré une validation / un jeton, de sorte que l'accès de la personne dans la zone d'accès (5) est possible.
